# EUROPÄISCHE PATENTSCHRIFT

(11) **EP 3 874 569 B1**
(45) Veröffentlichungstag und Bekanntmachung des Hinweises auf die Patenterteilung: **21.10.2026**
(21) Anmeldenummer: 19794522.3
(22) Anmeldetag: 24.10.2019
(51) Int. Cl.: H02G 3/22

(54) **KABELDURCHFÜHRUNG**
CABLE PASSAGE
TRAVERSÉE DE CÂBLE

(30) Priorität: 29.10.2018 DE 102018218426
(43) Veröffentlichungstag der Anmeldung: 08.09.2021
(73) Patentinhaber: icotek project GmbH & Co. KG, 73569 Eschach (DE)
(72) Erfinder: EHMANN, Valentin, 73525 Schwäbisch Gmünd (DE); EHMANN, Bruno, 73563 Mögglingen (DE)
(74) Vertreter: Dr. Weitzel & Partner
(86) Internationale Anmeldenummer: PCT/EP2019/079039
(87) Internationale Veröffentlichungsnummer: WO 2020/089031

(56) Entgegenhaltungen:
- EP-A1- 2 746 634
- EP-A2- 2 614 563
- EP-A2- 2 916 409
- DE-A1- 102014 016 890

## Beschreibung

Die vorliegende Erfindung betrifft eine Kabeldurchführung mit einem Rahmen, welcher wenigstens einen Freiraum zur Aufnahme wenigstens einer elastischen Kabeltülle aufweist, nach der im Oberbegriff von Anspruch 1 näher definierten Art.

Kabeldurchführungen mit elastischen Kabeltüllen, welche beispielsweise geschlitzt ausgeführt sind, um so vorkonfektionierte Kabel mit Steckern oder dergleichen aufzunehmen, sind soweit aus dem Stand der Technik bekannt. Der Rahmen, welcher eine oder mehrere der Kabeltüllen aufnimmt, umfasst wenigstens zwei Rahmenteile. Diese werden gemäß dem Stand der Technik typischerweise verschraubt, oder in Fällen, in denen keine hohe Abdichtung gegenüber Staub und insbesondere Waser notwendig ist, gegebenenfalls auch verrastet.

In der Praxis ist es so, dass insbesondere bei Kabeldurchführungen, welche entsprechend dicht ausgeführt werden, die Montage mit einem Verschrauben der Rahmenteile allgemein üblich ist. Sie ist jedoch relativ aufwändig und erfordert eine entsprechend große Montagezeit. Dies erhöht dementsprechend den Montageaufwand und damit auch die mit der Montage verursachten Kosten.

Aus dem europäischen Patent EP 2 614 563 B1 ist ein Aufbau bekannt, welcher dieser Problematik abhilft, indem er ein Verriegeln von zwei baugleichen Rahmenteilen über ein Schiebeelement beschreibt. Dieser Aufbau hat ähnlich wie das Verrasten zwar die Möglichkeit einer sehr schnellen Montage, bringt aber die für eine hohe Dichtwirkung erforderlichen Kräfte auf die elastischen Kabeltüllen typischerweise nicht auf. Die alternative Lösung mit wenigstens einem Spannbügelverschluss anstelle des Schiebeelements ist hinsichtlich der zu realisierenden Kräfte besser. Der Aufbau mit dem Spannbügelverschluss hat allerdings den Nachteil, dass ein Spannbügelverschluss relativ aufwändig in der Herstellung und bei der Montage des Spannbügelverschlusses selbst ist. Ein weiterer gravierender Nachteil, was die Abdichtwirkung angeht, ist durch das Prinzip des Spannbügelverschlusses gegeben. Der Spannbügelverschluss braucht zur sicheren Fixierung das Überschreiten eines Totpunkts. Es wird also mehr Spannung aufgebaut, als im Endeffekt auf die verspannten Rahmenteile und die darin befindlichen elastischen Kabeltüllen wirkt. Ein Teil des Spannbügels wird dann hinter einem Vorsprung eingehakt und der Aufbau durch die Elastizität der Kabeltüllen wiederum etwas entlastet. Die Kabeltüllen ziehen bei dieser Zurückstellung den Spannhebel quasi in die Vertiefung und sorgen so für ein sicheres Halten des Spannbügels. Will man nun jedoch eine möglichst hohe Abdichtung realisieren, ist genau dies ein entscheidender Nachteil. Die Kabeltüllen über ihre später benötigte Spannung hinaus zu belasten, führt nämlich in der Praxis dazu, dass diese sich minimal setzen und die Dichtheit durch das "Überbeanspruchen" der elastischen Kabeltüllen im oberen Totpunkt dann in der eigentlichen geschlossenen Stellung durch das minimale Entlasten nicht mehr vollständig gegeben ist.

Die DE 10 2014 016 890 A1 zeigt eine eine Leitungsdurchführung zur Festlegung in einer Wandöffnung mit mindestens zwei miteinander verbindbare Modulen und mindestens eine Durchtrittsöffnung zur Durchführung einer Leitung, wobei die Durchtrittsöffnung im montierten Zustand durch Aussparungen zweier benachbarter Module gebildet ist. Die Module umfassen Verbindungsmittel zur Ausbildung einer kraft- und/oder formschlüssigen Verbindung zwischen zwei benachbarten Modulen aufweisen. Die Leitung werden bei der Verbindung der beiden benachbarten Module dazwischen verklemmt.

Zum weiteren Stand der Technik kann ferner auf die EP 2 746 634 A1 der Anmelderin hingewiesen werden.

Die Aufgabe der hier vorliegenden Erfindung besteht nun darin, eine Kabeldurchführung nach der im Oberbegriff von Anspruch 1 definierten gattungsgemäßen Art so weiter zu bilden, dass bei einfacher Montage eine sehr hohe Dichtwirkung zu erzielen ist.

Erfindungsgemäß wird diese Aufgabe durch eine Kabeldurchführung mit den Merkmalen im Anspruch 1, und hier insbesondere im kennzeichnenden Teil des Anspruchs 1, gelöst. Vorteilhafte Ausgestaltungen und Weiterbildungen der Kabeldurchführung ergeben sich aus den hiervon abhängigen Unteransprüchen.

Die erfindungsgemäße Kabeldurchführung umfasst zwei Rahmenteile, welche ihrerseits wieder mehrteilig ausgebildet sein können und beispielsweise fest oder lösbar mit dem Rahmenteil verbundene Zwischenstege zur Definition mehrerer Aufnahmeräume für mehrere Kabeltüllen umfassen können. Diese beiden Rahmenteile werden nun über einen Spannhebel in einer Verspannrichtung mit den darin eingelegten elastischen Kabeltüllen, und den darin aufgenommenen Kabeln oder Blindstopfen, verspannt. Erfindungsgemäß ist es so, dass der Spannhebel, oder auch das zweite Rahmenteil, also das Rahmenteil, mit dem der Spannhebel nicht drehbeweglich verbunden ist, eine Führungsfläche aufweist. Das zweite Rahmenteil oder dementsprechend der Spannhebel, je nachdem, welches der Elemente welche Funktion übernimmt, weist eine Gleitkante auf, welche auch in Form von einzelnen Gleitpunkten, einer Gleitfläche oder dergleichen realisiert sein kann. Dabei ist es z.B. bei zwei L-förmigen Rahmenteilen auch denkbar, dass jedes der Rahmenteile beide Funktionen übernimmt, der eine Spannhebel also mit dem einen Rahmenteil rechts oben und einer weiterer Spannhebel mit dem anderen Rahmenteil links unten drehbeweglich verbunden ist.

Die Gleitkante bewegt sich bei einer Bewegung des Spannhebels in seine geschlossene Stellung entlang der Führungsfläche. Die Führungsfläche erstreckt sich dabei schräg zu der Verschlussrichtung, beispielsweise in Form einer schiefen Ebene oder bevorzugt in Form einer gekrümmten Fläche. Durch diese sich schräg zur Verschlussrichtung erstreckende Führungsfläche und die auf der Führungsfläche gleitende Gleitkante kommt es nun zu einer Bewegung der Beiden und damit der Rahmenteile gegeneinander durch die Drehbewegung des Spannhebels um das eine Rahmenteil. Der Spannhebel zieht quasi das erste Rahmenteil durch das Zusammenwirken der Führungsfläche und der Gleitkante in der Verschlussrichtung gegen das andere zweite Rahmenteil und verspannt damit die zwischen den Rahmenteilen eingelegten elastischen Kabeltüllen. Der Aufbau ist außerordentlich einfach und effizient in der Anwendung, da lediglich der Spannhebel bewegt werden muss. Über die aufzubringenden Kräfte und Wege entscheidet dabei die Form der Führungsfläche, sodass diese entsprechend der benötigten Anwendung variiert und eingestellt werden können. Anders als bei einem Spannbügelverschluss kann so ein Aufbau realisiert werden, welcher eine zunehmende Spannung aufbaut, ohne einen Punkt der maximalen Spannung zu überschreiten. Somit lässt sich ein außerordentlich dichter Aufbau der Kabeldurchführung nach der Montage erreichen.

Einen ganz entscheidenden Vorteil bietet in diesem Zusammenhang die Tatsache, dass zwischen dem Spannhebel und dem zweiten Rahmenteil ergänzend zu der ersten Führungsfläche und der ersten Gleitkante eine weitere zweite Führungsfläche und eine zweite Gleitkante ausgebildet sind, welche bei der Bewegung des Spannhebels in seine geschlossene Stellung zeitlich nach der ersten Führungsfläche und der ersten Gleitkante in Eingriff kommen. In Eingriff kommen bedeutet in diesem Zusammenhang, dass sie Kräfte übertragen. Eine Berührung kann, insbesondere bei einer relativ elastisch ausgebildeten Führungsfläche, auch vorher schon vorliegen.

Der erfindungsgemäße Aufbau erlaubt es so, beispielsweise über die erste Führungsfläche und die erste Gleitkante einen relativ großen Weg bei relativ wenig Spannkraft zu realisieren und durch eine geeignete Anordnung der zweiten Führungsfläche und der zweiten Gleitkante beispielsweise gegen Ende der Bewegung des Spannhebels in Richtung seiner geschlossenen Stellung hin einen geringeren Weg je Winkel des Spannhebels zu realisieren, aber dabei entsprechend höhere Kräfte aufzubringen, um so einerseits ein schnelles Verschließen und andererseits eine große die Abdichtung fördernde Verspannkraft zu erreichen.

Gemäß der Erfindung ist dazu vorgesehen, dass die erste Führungsfläche einen größeren Abstand vom Drehpunkt des Spannhebels um das erste Rahmenteil aufweist als die zweite Führungsfläche. Der Spannhebel wird typischerweise immer mit der maximalen Hebellänge betätigt. Die Betätigung erfolgt also in der Praxis so, dass die dem Drehpunkt abgewandte Seite des Spannhebels in Richtung des jeweiligen Rahmenteils gedrückt wird. Beispielsweise kann nun die erste Führungsfläche in diesem Bereich also mit relativ großem Abstand zu dem Drehpunkt liegen. Sie ist damit in etwa im Bereich der typischerweise auftretenden Krafteinwirkung. Somit liegt quasi kein Hebelweg zwischen der aufgebrachten Kraft bei der Montage und der Position der ersten Führungsfläche und ersten Gleitkante vor. Es lässt sich damit im Wesentlichen mit der Kraft des Werkers, welcher die Kabeldurchführung durch das Betätigen des Spannhebels verschließt, operieren. Die zweite Führungsfläche und dementsprechend die zweite Gleitkante befinden sich nun mit einem geringeren Abstand zu dem Drehpunkt zwischen dem Spannhebel und dem zweiten Rahmenteil. Hierdurch kommt es bei unveränderter Krafteinwirkung auf den Spannhebel zu einem Hebelweg, welcher die durch den Werker aufgebrachte Kraft entsprechend verstärkt. Der Hebelweg entspricht in dem oben beschriebenen Ausführungsbeispiel dabei der Differenz des Abstandes der ersten Führungsfläche vom Drehpunkt und des Abstandes der zweiten Führungsfläche vom Drehpunkt. Wird dieser Hebelweg entsprechend groß gewählt, dann kann, ohne dass bei der Montage ein größerer Kraftaufwand erfolgen muss, eine relativ hohe Kraft in Verspannrichtung auf die Kabeltüllen aufgebracht werden, was die Qualität der Abdichtung nochmals verbessert.

Dabei kann es gemäß einer vorteilhaften Weiterbildung der Kabeldurchführung vorgesehen sein, dass die Steigung der Führungsfläche sich mit zunehmender Bewegung des Spannhebels in Richtung seiner geschlossenen Stellung abflacht, sodass die Rahmenteile sich mit zunehmend geringerem Weg je Winkelabschnitt der Drehung des Spannhebels aufeinander zu bewegen. Die Bewegung kann also über die Führungsfläche so realisiert werden, dass am Anfang ein relativ großer Weg realisiert wird, da die Gegenkräfte der elastischen Kabeltüllen noch relativ gering sind. In dieser Situation kann durch den großen Weg ein schnelles Verspannen realisiert werden. Gegen Ende hin, wenn die Gegenkräfte der elastischen Kabeltüllen entsprechend größer werden, kann dann ein entsprechend kleinerer Weg realisiert werden, sodass hier insbesondere größere Verspannkräfte aufgebracht werden können.

Ferner kann es dabei gemäß einer sehr vorteilhaften Weiterbildung dieser Idee mit den beiden Führungsflächen vorgesehen sein, dass die erste Führungsfläche im Bereich der Berührung durch die erste Gleitkante am Ende der Bewegung des Spannhebels in die geschlossene Stellung eine Ausnehmung aufweist. Die Ausnehmung bewirkt dann, dass am Ende der Bewegung des Spannhebels in seine geschlossenen Stellung und damit am Ende der Bewegung des ersten Rahmenteils gegenüber dem zweiten Rahmenteil in Verspannrichtung die erste Führungsfläche und die erste Gleitkante nicht mehr im Eingriff zueinander stehen und somit dementsprechend keine Kräfte mehr übertragen.

Dies ist insbesondere dann sinnvoll, wenn es gemäß einer vorteilhaften Ausgestaltung dieser Idee vorgesehen ist, dass die Ausnehmung so ausgestaltet ist, dass diese bezogen auf die erste Gleitkante beginnt, nachdem bei einer Bewegung des Spannhebels in die geschlossene Stellung die zweite Gleitkante mit der zweiten Führungsfläche in Eingriff gekommen ist. Werden nun also zwei der Führungsflächen und Gleitkanten vorgesehen, so kann über die Ausnehmung eine Art "Aufgabenverteilung" realisiert werden. Beispielsweise kann zuerst die erste Führungsfläche mit der ersten Gleitkante in Eingriff stehen und dabei einen entsprechend großen Weg bei kleiner Kraft realisieren. Nachdem nun die zweite Führungsfläche, welche so beginnt, dass die zweite Gleitkante erst nach einem bereits zurückgelegten Wegstück des Spannhebels in Eingriff kommt, im Eingriff steht, kann die erste Gleitkante durch die Ausnehmung von der ersten Führungsfläche entfernt werden. Hierdurch wird ein statisch unbestimmter Zustand in dem beide Gleitkanten im Eingriff sind, verhindert. Die zweite Führungsfläche kann dann in Zusammenwirkung mit der zweiten Gleitkante einen geringeren Weg, insbesondere bei höherer Kraft, beispielsweise durch einen höheren Hebelweg, zur Realisierung der maximalen Spannkraft herangezogen werden.

Prinzipiell wäre dabei ein Aufbau denkbar, welcher ähnlich wie im gattungsgemäßen Stand der Technik mit identischen Rahmenteilen, wie es oben bereits erwähnt worden ist, auskommt. In der Praxis ist dies jedoch eher unpraktisch, da die eingebrachten Kabel und Kabeltüllen nicht selbsttätig in den Rahmenteilen halten, sodass der Aufbau relativ schwierig zu montieren ist. Um eine einfachere Montage zu realisieren, kann es daher gemäß einer vorteilhaften Weiterbildung der Idee vorgesehen sein, dass das erste Rahmenteil als Deckel mit drehbeweglicher Verbindung zu dem wenigstens einen Spannhebel und das zweite Rahmenteil als U-förmiges Rahmenteil mit zwei Schenkeln ausgebildet ist. Ein solches U-förmiges Rahmenteil mit zwei Schenkeln kann die Kabeltüllen zwischen den Schenkeln klemmend und ohne dass sie leicht herausfallen können aufnehmen. Unter den Schenkeln im Sinne der hier vorliegenden Beschreibung sind dabei die beiden äußeren Schenkel zu verstehen. Ungeachtet dessen können einstückige oder eingesteckte Zwischenstege vorhanden sein, beispielsweise um mehrere Freiräume zur Aufnahme von Kabeltüllen zu schaffen, insbesondere wenn eine Vielzahl von einzelnen Kabeltüllen nebeneinander positioniert werden soll, was bei der Verwendung von Zwischenstegen in dem U-förmigen zweiten Rahmenteil die Montage entsprechend erleichtert.

Der Deckel kann nun gemäß einer ersten Ausführungsvariante an jedem seiner Enden einen Spannhebel aufnehmen, welcher dann in der Geschlossenstellung neben den Schenkeln des zweiten Rahmenteils liegen. Der Aufbau würde also einen Deckel vorsehen, welcher sowohl rechts als auch links einen Spannhebel hat. Die Spannhebel, welche drehbeweglich in den Deckel eingehängt oder auch über eine Achse oder entsprechende Vorsprünge rastend mit dem Deckel verbunden sein können, werden dann bei der Montage rechts und links entlang des zweiten Rahmenteils beziehungsweise seiner Schenkel nach unten geklappt und verschließen so den Rahmen der Kabeldurchführung. Dies ist in der Montage sehr einfach, da die beiden Spannhebel gleichzeitig und gleichartig von oben nach unten bewegt werden können.

In einer alternativen Ausführungsvariante der Erfindung, welche so natürlich auch bei zwei L-Förmigen Rahmenteilen denkbar wäre, kann es auch vorgesehen sein, dass der Deckel einen Spannhebel an seinem einen Ende aufweist und an seinem anderen Ende einen Vorsprung zum Einhängen und drehbeweglichen Führen des Deckels in einer korrespondierenden Ausnehmung des zweiten Rahmenteils, wobei der Spannhebel in der geschlossenen Stellung neben einem der Schenkel des Rahmenteils liegt. Der Aufbau lässt sich also auch durch einen Deckel realisieren, welcher als erstes Rahmenteil in das zweite Rahmenteil eingehängt und drehbeweglich gegenüber dem mit den elastischen Kabeltüllen versehenen zweiten Rahmenteil in der Art des Deckels einer Truhe verschwenkt wird. Das freie Ende des Deckels hat dann entsprechend dem Spannhebel, welcher gemäß einer oder mehrerer der oben bereits beschriebenen Ausführungsvarianten realisiert werden kann. Dieser Aufbau kommt anders als der unmittelbar zuvor beschriebene Aufbau also mit einem einzigen Spannhebel aus und ist damit hinsichtlich der Konstruktion und Fertigung des Rahmens nochmals einfacher.

Unabhängig von dieser Ausgestaltung des Deckels ist es nun so, dass die Verspannrichtung ungeachtet der Bewegung des Deckels beim Aufsetzen durch den Werker oder um eine Drehachse zwischen den Rahmenteilen parallel zu den Schenkeln des zweiten Rahmenteils definiert sein soll, da dies letztlich die Richtung ist, in welcher die Kabeltüllen zumindest am Ende der Bewegung des Spannhebels verspannt werden.

Eine vorteilhafte Ausgestaltung der erfindungsgemäßen Kabeldurchführung sieht es ferner vor, dass der Spannhebel entlang seiner längsten Ausdehnung wenigstens eine mittige Nut aufweist, in welche in der geschlossenen Stellung des Spannhebels wenigstens ein Vorsprung des Schenkels des zweiten Rahmenteils ragt, oder umgekehrt. Ein solcher Vorsprung oder auch mehrere, so dass ein im Querschnitt kammartiges Profil entsteht, welches mit Vorsprüngen und Nuten ineinander greift kann den Spannhebel in geschlossenen Zustand ideal stabilisieren.

Gemäß einer sehr günstigen Weiterbildung dieser Idee kann es dabei vorgesehen sein, dass die wenigstens eine Führungsfläche in dem wenigstens einen Vorsprung ausgebildet ist und wobei die wenigstens eine Gleitkante durch eine partielle Verengung der wenigstens einen Nut ausgebildet ist. Ein solcher Vorsprung, welcher sich beispielsweise in der Art einer Finne quer zur Durchführungsrichtung der Kabel durch die Kabeldurchführung an dem oder den Schenkeln des ersten Rahmenteils erstreckt, ist relativ einfach in der Herstellung, da er beispielsweise bei der Herstellung des Rahmenteils im Spritzgussverfahren, beispielsweise aus Kunststoff oder einem faserverstärkten Kunststoff, einfach und leicht zu entformen realisiert werden kann. Der Spannhebel weist dann eine entsprechende Nut auf, welche im geschlossenen Zustand um diesen Vorsprung des zweiten Rahmenteils greift. Durch eine partielle Verengung der Nut lässt sich so die Gleitkante ausbilden, beispielsweise durch zwei Überstände rechts und links der Nut, welche mit der dann dementsprechend rechts und links angebrachten und damit zweigeteilten ersten und/oder zweiten Führungsfläche entsprechend zusammenwirken.

Prinzipiell immer, insbesondere jedoch bei dem eben beschriebenen Aufbau, kann es dabei vorgesehen sein, dass der Spannhebel und das zweite Rahmenteil, insbesondere im Bereich des Vorsprungs, senkrecht zur flächigen Ausdehnung des Rahmens verlaufende Bohrungen aufweisen, welche sich in der geschlossenen Stellung des Spannhebels decken. Solche sich deckende Bohrungen dienen in der geschlossenen Stellung des Spannhebels dann insbesondere dazu, diese Position des Spannhebels dauerhaft zu fixieren. Die Bohrungen können insbesondere Bohrungen sein, welche zur Befestigung von Rahmen von Kabeldurchführungen ohnehin allgemein gebräuchlich und üblich sind, sodass der fertig bestückte und verspannte Rahmen durch das Verschrauben beispielsweise mit der Wand eines Schaltschranks, um einen Durchbruch durch diese Wand herum, einerseits mit dem Schaltschrank verbunden und andererseits in der verspannten Position, und damit in der geschlossenen Stellung des Spannhebels, gesichert wird.

Ergänzend oder alternativ dazu ist es auch denkbar, dass der Spannhebel durch einen Rasthaken in seiner geschlossenen Stellung gegenüber dem zweiten Rahmenteil fixiert ist. Ein solcher Rasthaken kann den Spannhebel zuverlässig in der geschlossenen Stellung halten, sodass hier nicht nur die auftretenden Reibungskräfte zwischen wenigstens einer der Führungsflächen und ihrer Gleitkante als Sicherung wirken, sondern dass durch einen Rasthaken in an sich bekannter Art und Weise eine zusätzliche mechanische Sicherung geschaffen wird.

Eine vorteilhafte Weiterbildung der erfindungsgemäßen Kabeldurchführung kann es ferner vorsehen, dass die Rahmenteile Ausrichtvorsprünge und korrespondierende Rücksprünge in dem jeweils anderen Rahmenteil aufweisen, welche während des Verspannens in Verspannrichtung zunehmend ineinander greifen und die Rahmenteile gegeneinander ausrichten und sichern. Über solche Ausrichtvorsprünge oder Zentriervorsprünge lässt sich also eine formschlüssige Verbindung der Rahmenteile untereinander im verspannten Zustand erreichen, sodass der Rahmen beispielsweise an seiner Oberfläche entsprechend eben ist und dementsprechend gut über eine flache Dichtung, beispielsweise gegenüber der Wand eines Schaltschranks, abgedichtet werden kann. Auch kann durch die Ausrichtung die Zusammenwirkung der Rahmenteile während des Verspannens und im verspannten Zustand in der gewünschten Art und Weise und mit der gewünschten Position, beispielsweise von Dichtkanten, Dichtflächen und dergleichen, erreicht werden.

Weitere vorteilhafte Ausgestaltungen der Kabeldurchführung gemäß der Erfindung ergeben sich aus den Ausführungsbeispielen, welche nachfolgend unter Bezugnahme auf die Figuren näher beschrieben sind.

Es zeigen
- Figur 1: eine dreidimensionale Ansicht einer möglichen Ausführungsform der erfindungsgemäßen Kabeldurchführung mit elastischen Kabeltüllen und Kabeln;
- Figur 2: der Aufbau gemäß Figur 1 in einer Frontansicht;
- Figur 3: die Ansicht gemäß Figur 2 in einer Schnittdarstellung;
- Figur 4: eine alternative Ausführungsform der Kabeldurchführung gemäß der Erfindung in einer Frontansicht;
- Figur 5: die Ansicht gemäß Figur 4 in einer Schnittdarstellung;
- Figur 6: einen Ausschnitt aus der Kabeldurchführung mit dem Spannhebel in einer geöffneten Stellung;
- Figur 7: eine Darstellung analog zu der in Figur 6 mit dem Spannhebel in einer ersten Zwischenstellung;
- Figur 8: eine Darstellung analog zu der in Figur 6 mit dem Spannhebel in einer zweiten Zwischenstellung;
- Figur 9: eine Darstellung analog zu der in Figur 6 mit dem Spannhebel in der geschlossenen Stellung; und
- Figur 10: ein Beispiel für die Ausgestaltung eines Rasthakens in einer prinzipmäßigen Schnittdarstellung gemäß der Linie X - X in Figur 9.

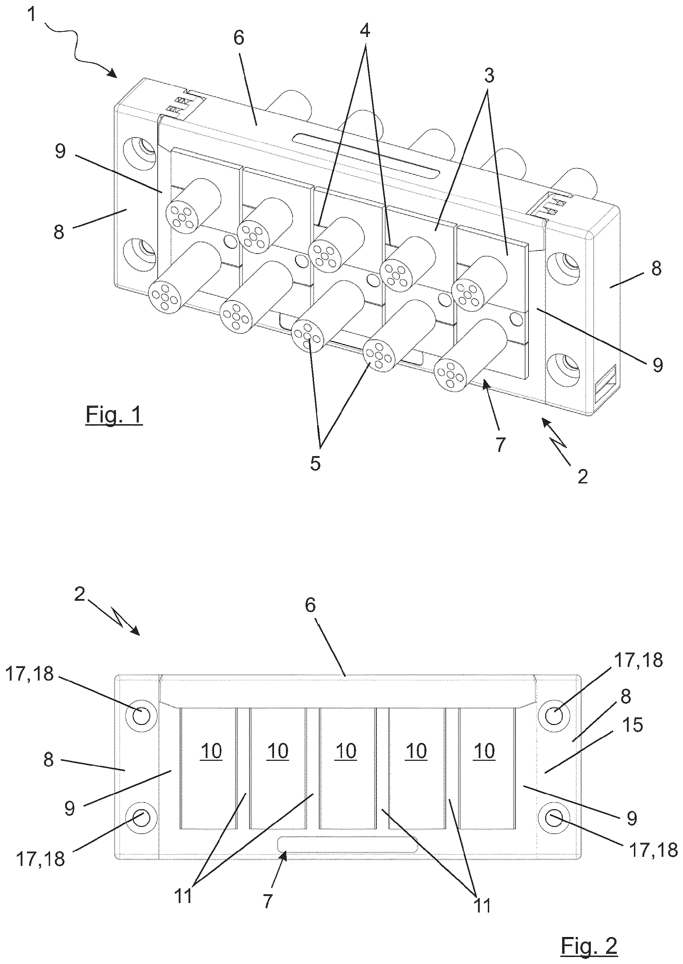

In der Darstellung der Figur 1 ist eine Kabeldurchführung 1 in einer ersten Ausführungsform dargestellt. Die dreidimensionale Darstellung zeigt einen Rahmen 2, in welchem mehrere elastische Kabeltüllen 3 positioniert sind. Die Kabeltüllen 3, von welchen nicht alle mit einem Bezugszeichen versehen sind, sind in dem hier dargestellten Ausführungsbeispiel jeweils mit einem Schlitz 4 versehen, sodass sie, in an sich bekannter Art und Weise, aufgeklappt werden können, um auch vorkonfektionierte mit Steckern versehene Kabel 5 aufzunehmen. Von den Kabeln 5 sind einige abschnittsweise dargestellt, wobei auch hier nicht alle der Kabel 5 mit einem eigenen Bezugszeichen versehen sind. Der Rahmen 2 besteht in dem hier dargestellten Ausführungsbeispiel aus einem ersten Rahmenteil 6, welches hier einen Deckel für ein zweites U-förmiges Rahmenteil 7 ausbildet. Drehbeweglich beziehungsweise gelenkig mit dem ersten Rahmenteil 6 verbunden sind rechts und links am Rahmen 2 jeweils Spannhebel 8 zu erkennen, welche in dem hier dargestellten geschlossenen Zustand der Spannhebel 8 neben Schenkeln 9 des zweiten Rahmenteils 7 zu liegen kommen. Alternativ dazu wäre der Aufbau auch mit zwei L-förmigen Rahmenteilen denkbar, sodass ein Spannhebel 8 mit dem einen Rahmenteil 7 z.B. rechts oben und der weitere Spannhebel 8 mit dem anderen Rahmenteil 6 links unten drehbeweglich verbunden wäre.

In der Darstellung der Figur 2 ist in einer Draufsicht die Kabeldurchführung 1 nochmals ohne die elastischen Kabeltüllen 3 und die Kabel 5 dargestellt. Hier sind dafür in dem U-förmigen zweiten Rahmenteil 7 Freiräume 10 zur Aufnahme der elastischen Kabeltüllen 3 zu erkennen. Die Freiräume 10 sind in der Darstellung der Figur 2 rein beispielhaft als fünf gleich große Freiräume zwischen den Schenkeln 9 des zweiten Rahmenteils 7 ausgebildet. Sie sind optional und wiederum rein beispielhaft durch Zwischenstege 11 voneinander getrennt. Genauso gut wäre es denkbar, unterschiedlich große Freiräume 10 oder lediglich einen einzigen Freiraum vorzusehen, wobei in jedem der Freiräume eine, oder wie es aus der Darstellung der Figur 1 zu erkennen ist, mehrere der Kabeltüllen 3, insbesondere in Stapelrichtung übereinander, aufgenommen werden könnten. Die Zwischenstege 11 können fest mit dem zweiten Rahmenteil ausgeführt oder steckbar mit diesem verbindbar realisiert sein.

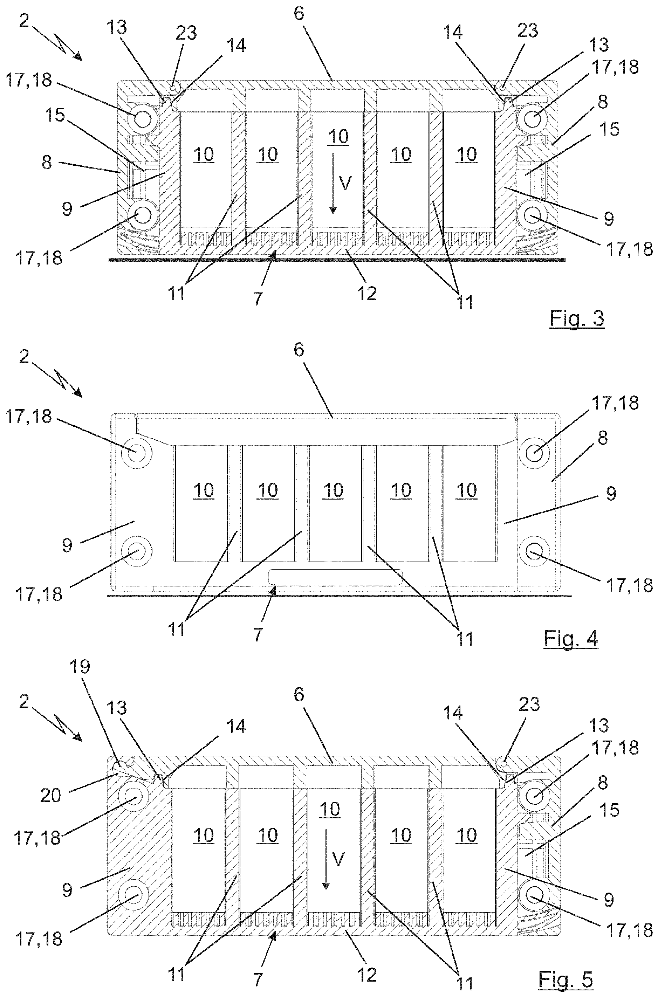

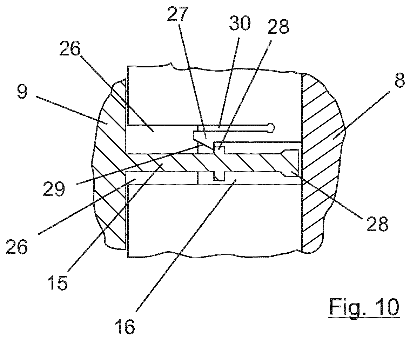

Die entscheidende Funktionalität der Kabeldurchführung 1 liegt nun im Einsatz der Spannhebel 8, über welche das erste Rahmenteil 6, hier der Deckel, mit dem zweiten Rahmenteil 7 bei eingelegten elastischen Kabeltüllen 3 verspannt werden kann. Der grundsätzliche Aufbau ist dabei in der Schnittdarstellung der Figur 3 zu erkennen, wobei in dieser und allen nachfolgenden Figuren zur Verdeutlichung auf die Darstellung der Kabeltüllen 3 verzichtet worden ist. Das zweite Rahmenteil 7 kann, wie es hier im unteren Bereich zu erkennen ist, teilweise über eine Fachwerkkonstruktion realisiert sein, um so eine stabile und dennoch leichte Verbindung der Schenkel 9 über ein Bodenteil 12 zu erreichen. Das als Deckel genutzte erste Rahmenteil 6 kann prinzipiell ebenfalls in dieser Art ausgeführt sein, auch wenn dies hier in dem dargestellten Ausführungsbeispiel so nicht dargestellt ist. Zwischen dem ersten Rahmenteil 6 und dem zweiten Rahmenteil 7 gibt es nun Ausrichtvorsprünge 13, hier in dem zweiten Rahmenteil 7, und entsprechende Rücksprünge 14, hier in dem ersten Rahmenteil 6, sodass die Rahmenteile sich beim Verspannen in der hier eingezeichneten Verspannrichtung V gegeneinander ausrichten und mechanisch in ihrer Positionierung zueinander sichern. Die Spannhebel 8 sind hier jeweils in ihrer geschlossenen Position dargestellt, worauf später noch im weiteren Detail eingegangen wird. Sie haben in einer Ebene hinter der hier ausgewählten Schnittebne der Figur 3 eine entsprechende Ausnehmung, sind also mit einer Nut versehen, in welche Vorsprünge 15 der Schenkel 9 ragen. Die Nut selbst ist dabei lediglich in der Darstellung der Figur 10 direkt zu erkennen und dort mit dem Bezugszeichen 16 versehen. Der Aufbau wäre auch so denkbar, dass die Nut 16 im Schenkel 8 und der Vorsprung 15 im Spannhebel 8 ist und/oder mit mehreren nebeneinander liegenden und in einander greifenden Nuten 16 und Vorsprüngen 15.

Die beiden Spannhebel 8 verspannen dann bei der Montage den ersten Rahmenteil 6, also den Deckel, gegenüber dem zweiten Rahmenteil 7, also dem U-förmigen Rahmenteil, in welchem die Freiräume 10 für die elastischen Kabeltüllen 3 vorgesehen sind. In der Ausführungsvariante der Figuren 1 bis 3 sind dabei jeweils zwei der Spannhebel 8 vorhanden, sodass der Aufbau bei der Montage rechts und links gleichmäßig verspannt werden kann, was einfach und effizient in später noch näher beschriebener Art und Weise erfolgt. In der verspannten Position und damit in der geschlossenen Stellung der Spannhebel 8, wie es in den Figuren 1 bis 3 dargestellt ist, kommen dabei Bohrungen 17 in den Spannhebeln 8 und Bohrungen 18 in den Schenkeln 9 beziehungsweise in den Vorsprüngen 15 der Schenkel 9 fluchtend übereinander zu liegen. Durch diese dann deckungsgleich fluchtenden Bohrungen 17, 18 können Schrauben geführt werden, beispielsweise um den Rahmen 2 der Kabeldurchführung 1 an der Wand eines Schaltschranks um einen Durchbruch herum zu montieren. Gleichzeitig sichern die durch die deckungsgleich fluchtenden Bohrungen 17, 18 geführten Schrauben die geschlossene Position der Spannhebel 8 und sichern somit die geschlossene und verspannte Stellung der Kabeldurchführung 1.

Die Figuren 4 und 5 zeigen nun eine alternative Ausführungsvariante der Kabeldurchführung 1 beziehungsweise analog zur Darstellung in den Figuren 2 und 3 ihres Rahmens 2. Der Aufbau ist dabei im Wesentlichen analog, verzichtet jedoch im hier dargestellten Ausführungsbeispiel auf der linken Seite auf einen der beiden Spannhebel 8. Der linke Schenkel 9 des zweiten U-förmigen Rahmenteils 7 ist dementsprechend breiter ausgeführt, um dieselbe Gesamtbreite und insbesondere denselben Abstand der Bohrungen 17, 18 auf der einen Seite und 18 auf der anderen Seite zu erreichen, wie in den zuvor beschriebenen Ausführungsbeispielen. In der Schnittdarstellung der Figur 5 ist das Prinzip zu erkennen. Der erste als Deckel genutzte Rahmenteil 6 weist einen Vorsprung 19 auf, welcher zum Einhängen und drehbeweglichen Führen des ersten Rahmenteils 6 beziehungsweise Deckels in einer korrespondierenden Ausnehmung 20 des zweiten Rahmenteils und hier insbesondere des linken Schenkels 9 des zweiten Rahmenteils 7 konzipiert ist. Der als Deckel genutzte erste Rahmenteil 6 lässt sich also zusammen mit seinem Spannhebel 8, solange dieser noch in einer geöffneten Stellung ist, entsprechend verschwenken, um so mit zunehmender Verschwenkung in der Art des Deckels einer Truhe den zweiten Rahmenteil 7 entsprechend zu verschließen, wobei auch hier wieder die Ausrichtvorsprünge 13 und Rücksprünge 14 korrespondierend in Eingriff kommen. In der Darstellung der Figur 5 ist auch hier wieder die endgültige verschlossene Position mit dem Spannhebel 8 in der geschlossenen Stellung dargestellt. Auch dieser Aufbau ließe sich mit zwei L-Förmigen Rahmenteilen 6, 7 entsprechend realisieren.

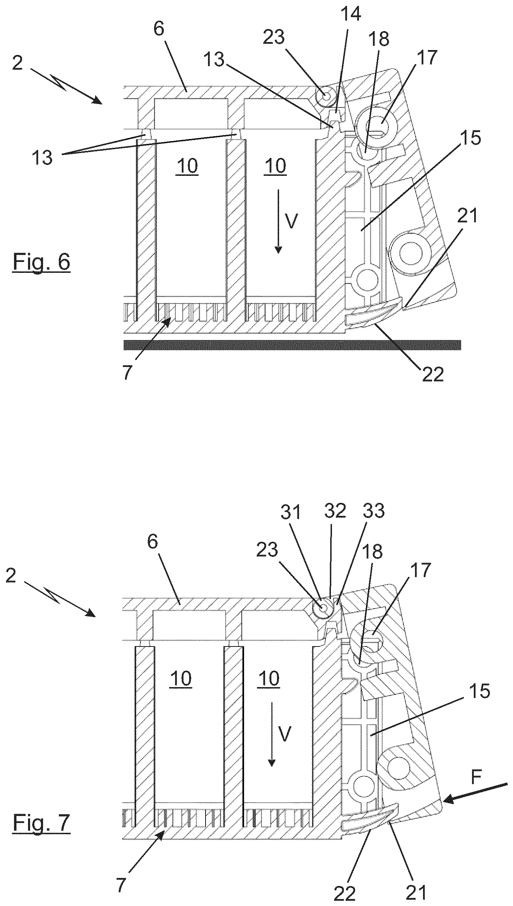

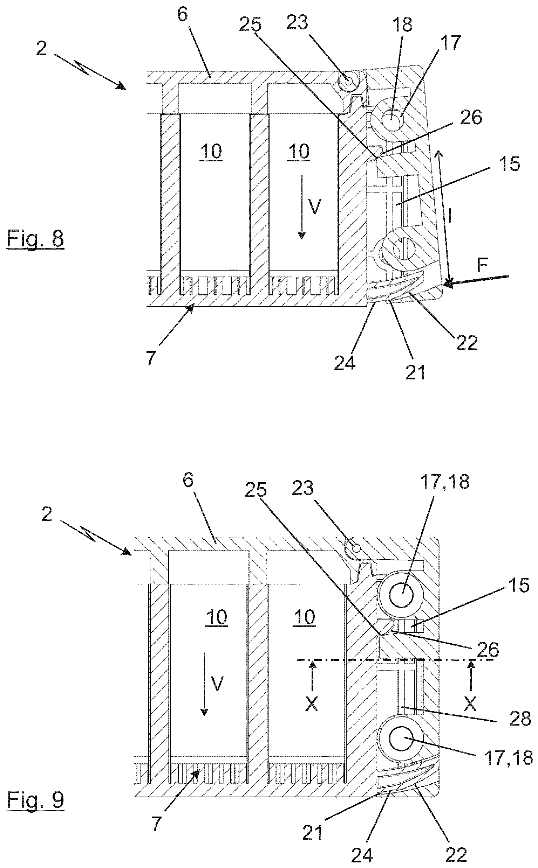

In den nachfolgenden Figuren wird nun insbesondere auf die Bewegung des Spannhebels 8 von seiner offenen Stellung in seine geschlossene Stellung und die dabei stattfindenden Mechanismen zum Verspannen des ersten Rahmenteils 6 gegenüber dem zweiten Rahmenteil 7 eingegangen. Dies wird rein beispielhaft anhand eines rechten Spannhebels 8 beschrieben und gilt damit sowohl für die Ausführungsvariante der Figuren 1 bis 3 als auch die der Figuren 4 und 5. Der linke Spannhebel 8 bei der Ausführungsvariante der Figuren 1 bis 3 funktioniert entsprechend analog. Dabei sind die Schnittebenen der Figuren 7 und 8 leicht versetzt zu denen der Figuren 6 und 9 gewählt worden, um so die effiziente, wenn gleich nur beispielhafte, Ausgestaltung der drehbeweglichen Aufnahme des Spannhebels 8 an dem ersten Rahmenteil 6 im Bereich des Drehpunkts 23 zu verdeutlichen. Der Spannhebel 8 weist dazu eine über mehrere Stege 32 angebrachte Achse 31 auf, die in eine Reihe von ausgerundeten Zinken 33 des ersten Rahmenteils 6 lösbar eingehängt wird. Dabei ist eine Verrastung an den Enden der Achse 31 denkbar, um den Spannhebel 8 auch im demontierten Zustand sicher am ersten Rahmenteil 6 zu halten. Die Kräfte werden aber nicht darüber sondern über die Achse 31 und die Zinken 33 übertragen, was durch die große Fläche sehr hohe Spannkräfte ermöglicht.

Figur 6 zeigt den locker auf das zweite Rahmenteil 7 aufgelegten Deckel als erstes Rahmenteil 6 mit dem Spannhebel 8 in einer noch geöffneten Stellung. Der Spannhebel 8 kann in dieser Stellung locker neben dem Schenkel 9 des zweiten Rahmenteils 7 und dessen Vorsprung 15 positioniert sein. Der Spannhebel 8 steht mit dem zweiten Rahmenteil 7 noch nicht oder noch nicht nennenswert in Eingriff. Für die Funktion wichtig und in der Darstellung der Figur 6 gut zu erkennen weist der Spannhebel 8 eine erste Gleitkante 21 in Form einer relativ kleinen in die Blattebene ragenden Fläche auf. Diese Gleitkante 21 des Spannhebels 8 wirkt mit einer ersten Führungsfläche 22 des zweiten Rahmenteils, welche hier an dem Schenkel 9 und in Verbindung mit dem Vorsprung 15 realisiert ist, zusammen. In der Darstellung der Figur 7 ist dies nach dem Verschwenken des Spannhebels 8 um einen Winkelbetrag in Richtung des Schenkels 9 gut zu erkennen. Die Führungsfläche 22 ist dabei gekrümmt ausgeführt und weist eine Schrägstellung gegenüber der Verspannrichtung V der Rahmenteile 6, 7 gegeneinander auf. Die Steigung beginnt mit einer relativ großen steilen Steigung, sodass im ersten Teil des Winkelwegs des Spannhebels 8 ein relativ großer Weg des ersten Rahmenteils 6 gegenüber dem zweiten Rahmenteil 7 erzielt wird. In dieser Phase sind die hier nicht dargestellten aber in den Ausnehmungen 10 angeordneten elastischen Kabeltüllen 3 noch relativ leicht zu verspannen, da wir hier praktisch zu Beginn deren Federkennlinie sind. Ein Werker, welcher gemäß dem Pfeil F auf den Spannhebel 8 drückt, erreicht also mit relativ geringer Kraft einen relativ großen Weg, um welchen der erste Rahmenteil 6 gegenüber dem zweiten Rahmenteil 7 bewegt wird. Aufgrund der relativ kleinen Winkel zwischen der Oberfläche des Spannhebels 8 in dieser Position und der Senkrechten ist die wirksame Kraft dabei in etwa mit der aufgebrachten Kraft gleichzusetzen, insbesondere da die Kräfte ohnehin in Abhängigkeit des jeweiligen Werkers einer unterschiedlich großen Kraft unterliegen, sodass die Funktion näherungsweise mit einer einzigen eingezeichneten Kraft F erläutert werden kann.

In der Darstellung der Figur 8 ist der Spannhebel 8 nun um ein weiteres Stück seines Winkelweges um seine Drehachse 23 weiterbewegt. Die erste Gleitkante 21 ist auf der ersten Führungsfläche 22 bereits ein großes Stück weit geglitten, und die beiden Rahmenteile 6, 7 haben sich bereits deutlich aufeinander zu bewegt. Die erste Gleitkante 21 nähert sich einer Ausnehmung 24. Ein kleines Winkelwegstück des Spannhebels 8 weiter als in der Darstellung der Figur 8 wird die erste Gleitkante 21 über dieser Ausnehmung zu liegen kommen und damit nicht mehr im Eingriff stehen. Dafür steht nun wie es in der Darstellung der Figur 8 zu erkennen ist eine zweite Gleitkante 25 mit einer zweiten Führungsfläche 26 im Eingriff. Die zweite Führungsfläche 26 und die zweite Gleitkante 25 bestehen jeweils aus zwei rechts und links der Nut 16 beziehungsweise des Vorsprungs 15 ausgebildeten Teilen. Der Eingriff zwischen der zweiten Gleitkante 25 und der zweiten Führungsfläche 26 bleibt dabei bis zum Ende der Bewegung des Spannhebels 8 in seiner in Figur 9 dargestellten geschlossenen Stellung bestehen. Die Steigung ist dabei insbesondere am Ende der Bewegung des Spannhebels 8 in seiner Geschlossenstellung bei der zweiten Führungsfläche 26, welche ebenfalls schräg zur Verspannrichtung V steht, entsprechend kleiner, um so zwar nur noch einen kleinen Weg zwischen dem ersten Rahmenteil 6 und dem zweiten Rahmenteil 7 zu realisieren, dabei aber eine relativ große Verspannkraft aufzubringen. Dazu ist der Abstand der zweiten Führungsfläche 26 und der zweiten Gleitkante 25 von dem Drehpunkt 23, um welchen der Spannhebel 8 sich gegenüber dem ersten Rahmenteil 6 dreht, deutlich geringer, als der der ersten Führungsfläche 22 und der ersten Gleitkante 21, in deren Bereich die Kraft F einwirkt. Die Wirkung der Kraft F im Bereich der ersten Führungsfläche 22 und der ersten Gleitkante 21 ist also eine direkte Kraftwirkung, während die Wirkung der gleichgroßen Kraft F beim Eingriff der zweiten Gleitkante 25 auf die zweite Führungsfläche 26 entsprechend verstärkt ist, da nun ein in Figur 8 eingezeichneter Hebelweg I zur Verfügung steht, um die Wirkung der Kraft F zu verstärken. Hierdurch kommt es zu einer sehr kräftigen Verspannung der elastischen Kabeltüllen 3 in den Freiräumen 10. Dadurch, dass die zweite Führungsfläche 26 bis in die geschlossene Stellung des Spannhebels 8 weiter ansteigt, wird bis zum Erreichen der geschlossenen Stellung des Spannhebels 8 eine immer größere Kraft auf die elastischen Kabeltüllen 3 aufgebracht, ohne dass diese zwischendurch wieder entlastet werden. Dies führt zu einer außerordentlich guten Abdichtung der gesamten Kabeldurchführung 1.

In der in Figur 9 (analog zu den Figuren 3 und 5) gezeigten geschlossenen Stellung des Spannhebels 8 liegen nun die Bohrungen 17 im Spannhebel 8 und die Bohrungen 18 im Vorsprung 15 des Schenkels 9 fluchtend deckungsgleich übereinander. Werden nun Schrauben durchgeführt, um beispielsweise die Kabeldurchführung 1 mit der Wand eines Schaltschranks zu verschrauben, wird gleichzeitig die geschlossene Stellung des oder der Spannhebel 8 gesichert und damit die Kabeldurchführung 1 zuverlässig in ihrer geschlossenen und verspannten Position der Rahmenteile 6, 7 fixiert.

Alternativ oder insbesondere ergänzend könnte auch ein Rasthaken 27 vorgesehen werden. In der Schnittdarstellung gemäß der Linie X - X in Figur 9, welche in der Figur 10 zu erkennen ist, ist ein solcher beispielhaft dargestellt. Die Vorsprünge 15 weisen Rippen 28 als Verstärkung auf. Eine dieser Rippen 28 lässt sich nun beispielsweise dazu nutzen, die geschlossene Position des Spannhebels 8 mit dem Rasthaken 27 zu sichern. Rein beispielhaft ist ein solcher Rasthaken 27 an dem Teil des Spannhebels 8 in Richtung des Vorsprungs 15 ausgebildet, welcher an seinem anderen Ende die zweite Gleitkante 25 trägt. Der Aufbau wird durch eine Schräge 29 des Rasthakens 27 und seine durch einen Spalt 30 erreichte Elastizität über die Rippe 28 gleiten und sich dann entsprechend mit dieser verrasten, wenn der Spannhebel 8 seine geschlossene Stellung erreicht hat. Ergänzend oder alternativ dazu wäre auch ein Verrasten im Bereich der Ausnehmung 24 denkbar.

## Patentansprüche

1. Kabeldurchführung (1) mit einem Rahmen (2), welcher wenigstens einen Freiraum (10) zur Aufnahme wenigstens einer elastischen Kabeltülle (3) aufweist, und welcher wenigstens ein erstes und ein zweites Rahmenteil (6, 7) umfasst, sowie einen mit dem ersten Rahmenteil (6) um einen Drehpunkt (23) drehbeweglich verbundenen oder verbindbaren Spannhebel (8), der zwischen einer geöffneten Stellung und einer geschlossenen Stellung beweglich ist, wobei die Rahmenteile (6, 7) in der geschlossen Stellung des Spannhebels (8) in einer Verspannrichtung (V) gegeneinander verspannt sind, wobei der Spannhebel (8) und/oder das zweite Rahmenteil (7) eine erste Führungsfläche (22) und das zweite Rahmenteil (7) und/oder der Spannhebel (8) eine bei einer Bewegung des Spannhebels (8) zumindest zeitweise entlang der ersten Führungsfläche (22) gleitende erste Gleitkante (21) aufweisen, wobei sich die erste Führungsfläche (22) schräg zu der Verspannrichtung (V) erstreckt, sodass sich die Rahmenteile (6, 7) bei einer Bewegung des Spannhebels (8) in seine geschlossene Stellung aufeinander zu bewegen,
**dadurch gekennzeichnet, dass**
zwischen dem Spannhebel (8) und dem zweiten Rahmenteil (7) eine weitere zweite Führungsfläche (26) und zweite Gleitkante (25) ausgebildet sind, welche bei der Bewegung des Spannhebels (8) in seine geschlossene Stellung zeitlich nach der ersten Führungsfläche (22) und der ersten Gleitkante (21) in Eingriff kommen, sodass am Anfang der Bewegung ein größerer Weg mit geringeren Verspannkräften und am Ende der Bewegung ein kleinerer Weg mit größeren Verspannkräften realisiert ist, wobei die erste Führungsfläche (22) einen größeren Abstand zu dem Drehpunkt (23) des Spannhebels (8) um das erste Rahmenteil (6) aufweist, als die zweite Führungsfläche (26).

2. Kabeldurchführung (1) nach Anspruch 1, **dadurch gekennzeichnet, dass** die Steigung der ersten Führungsfläche (22) sich mit zunehmender Bewegung des Spannhebels (8) in Richtung seiner geschlossenen Stellung abflacht, sodass die Rahmenteile (6, 7) sich mit zunehmend geringerem Weg je Winkelabschnitt der Drehung des Spannhebels (8) aufeinander zu bewegen.

3. Kabeldurchführung (1) nach Anspruch 1 oder 2, **dadurch gekennzeichnet, dass** die erste Führungsfläche (22) im Bereich der Berührung durch die erste Gleitkante (21) am Ende der Bewegung des Spannhebels (8) in die geschlossene Stellung eine Ausnehmung (24) aufweist.

4. Kabeldurchführung (1) nach Anspruch 3, **dadurch gekennzeichnet, dass** die Ausnehmung (24) so ausgestaltet ist, dass diese bezogen auf die erste Gleitkante (21) beginnt, nachdem bei einer Bewegung des Spannhebels (8) in die geschlossene Stellung die zweite Gleitkante (25) mit der zweiten Führungsfläche (26) in Eingriff gekommen ist.

5. Kabeldurchführung (1) nach einem der Ansprüche 1 bis 4, **dadurch gekennzeichnet, dass** das erste Rahmenteil (6) als Deckel mit drehbeweglicher Verbindung zu dem wenigstens einen Spannhebel (8) und das zweite Rahmenteil (7) als U-förmiges Rahmenteil mit zwei Schenkel (9) ausgebildet ist.

6. Kabeldurchführung (1) nach Anspruch 5, **dadurch gekennzeichnet, dass** der Deckel zwei der Spannhebel (8) an jedem seiner Enden aufnimmt, welche in der geschlossenen Stellung neben den Schenkeln (9) des zweiten Rahmenteils (7) liegen.

7. Kabeldurchführung (1) nach einem der Ansprüche 1 bis 5, **dadurch gekennzeichnet, dass** das erste Rahmenteil (6) einen Spannhebel (8) an seinem einem Ende aufnimmt und an seinem anderen Ende einen Vorsprung (19) zum Einhängen und drehbeweglichen Führen des ersten Rahmenteils (6) in einer korrespondieren Ausnehmung (20) des zweiten Rahmenteils (7) aufweist, wobei der Spannhebel (8) in der geschlossenen Stellung neben einem der Schenkel (9) des zweiten Rahmenteils (7) liegt.

8. Kabeldurchführung (1) nach einem der Ansprüche 1 bis 7, **dadurch gekennzeichnet, dass** der Spannhebel (8) oder der korrespondierende Schenkel (9) des zweiten Rahmenteils (7) entlang seiner längsten Ausdehnung wenigstens eine mittige Nut (16) aufweist, in welche in der geschlossenen Stellung des Spannhebels (8) wenigstens ein Vorsprung (15) des Schenkels (9) des zweiten Rahmenteils (7) oder des Spannhebels (8) ragt.

9. Kabeldurchführung (1) nach Anspruch 8, **dadurch gekennzeichnet, dass** wenigstens eine der Führungsflächen (22, 26) in dem wenigstens einen Vorsprung (15) ausgebildet ist, und wobei wenigstens eine der Gleitkanten (21, 22) durch eine partielle Verengung der wenigstens einen Nut (16) ausgebildet ist.

10. Kabeldurchführung (1) nach einem der Ansprüche 1 bis 9, **dadurch gekennzeichnet, dass** der Spannhebel (8) und das zweite Rahmenteil (7) Bohrungen (17, 18) senkrecht zur flächigen Ausdehnung des Rahmens (2) aufweisen, welche sich in der geschlossenen Stellung des Spannhebels (8) decken.

11. Kabeldurchführung (1) nach einem der Ansprüche 1 bis 10, **dadurch gekennzeichnet, dass** der Spannhebel (8) durch einen Rasthaken (27) in seiner geschlossenen Stellung gegenüber dem zweiten Rahmenteil (7) fixiert ist.

12. Kabeldurchführung nach einem der Ansprüche 1 bis 11, **dadurch gekennzeichnet, dass** die Rahmenteile (6, 7) Ausrichtvorsprünge (13) und korrespondierende Rücksprünge (14) in dem jeweils anderen Rahmenteil (7, 6) aufweisen, welche während des Verspannens in Verspannrichtung (V) zunehmend ineinander greifen und die Rahmenteile (6, 7) zueinander ausrichten und sichern.

## Claims

1. Cable bushing (1) comprising a frame (2), which comprises at least one space (10) for receiving at least one resilient cable grommet (3), and which has at least one first and one second frame part (6, 7), as well as a clamping lever (8), which is be rotatably movably around a fulcrum (23) connected to the first frame part (6) and is movable between an open position and a closed position, wherein the frame parts (6, 7) are braced against one another in a bracing direction (V) in the closed position of the clamping lever (8), wherein the clamping lever (8) and/or the second frame part (7) comprise a first guide surface (22) and the second frame part (7) and/or the clamping lever (8) comprise a first sliding edge (21) which slides at least temporarily along the first guide surface (22) when the clamping lever (8) moves, wherein the first guide surface (22) extends obliquely relative to the bracing direction (V) such that the frame parts (6, 7) can be moved towards one another when the clamping lever (8) moves into its closed position.
**characterized in that**
between the clamping lever (8) and the second frame part (7), another second guide surface (26) and second sliding edge (25) are formed, which come into engagement after the first guide surface (22) and the first sliding edge (21) when the clamping lever (8) moves into its closed position, so that at the beginning of the movement a larger path with lower tension forces and at the end of the movement a smaller path with higher tension forces is realized, wherein the first guide surface (22) has a greater distance from the fulcrum (23) of the clamping lever (8) about the first frame part (6) than the second guide surface (26).

2. Cable bushing (1) according to claim 1, **characterised in that** the slope of the first guide surface (22) flattens out as the clamping lever (8) moves closer towards its closed position, such that the frame parts (6, 7) can be moved towards one another as the path becomes shorter, depending on the angular section of the rotation of the clamping lever (8).

3. Cable bushing (1) according to claim 1or 2, **characterised in that** the first guide surface (22) comprises a recess (24) in the region of contact with the first sliding edge (21) at the end of the movement of the clamping lever (8) into the closed position.

4. Cable bushing (1) according to claim 3, **characterised in that** the recess (24) is designed such that, based on the first sliding edge (21), it begins once the second sliding edge (25) has come into engagement with the second guide surface (26) when the clamping lever (8) moves into the closed position.

5. Cable bushing (1) according to any of claims 1 to 4, **characterised in that** the first frame part (6) is designed as a lid having a rotatably movable connection to the at least one clamping lever (8) and the second frame part (7) is designed as a U-shaped frame part with two legs (9).

6. Cable bushing (1) according to claim 5, **characterised in that** the lid receives two of the clamping levers (8) at each of its ends, which are beside the legs (9) of the second frame part (7) in the closed position.

7. Cable bushing (1) according to any of claims 1 to 56, **characterised in that** the first frame part (6) receives a clamping lever (8) at its one end, and at its other end, comprises a projection (19) for mounting and rotatably movably guiding the first frame part (6) in a corresponding recess (20) of the second frame part (7), wherein the clamping lever (8) is beside one of the legs (9) of the second frame part (7) in the closed position.

8. Cable bushing (1) according to any of claims 1 to 7, **characterised in that** the clamping lever (8) or the corresponding leg (9) of the second frame part (7) comprises at least one central groove (16) along its longest extension, into which groove at least one projection (15) of the leg (9) of the second frame part (7) or the clamping lever (8) projects in the closed position of the clamping lever (8).

9. Cable bushing (1) according to claim 8, **characterised in that** at least one of the guide surfaces (22, 26) is formed in the at least one projection (15), wherein at least one of the sliding edges (21, 22) is formed by a partial narrowed portion of the at least one groove (16).

10. Cable bushing (1) according to any of claims 1 to 9, **characterised in that** the clamping lever (8) and the second frame part (7) comprise holes (17, 18) perpendicularly to the planar extension of the frame (2), which line up in the closed position of the clamping lever (8).

11. Cable bushing (1) according to any of claims 1 to 10, **characterised in that** the clamping lever (8) is fixed in its closed position relative to the second frame part (7) by a latching hook (27).

12. Cable bushing according to any of claims 1 to 12, **characterised in that** the frame parts (6, 7) comprise orienting projections (13) and corresponding recessed portions (14) in the respectively other frame part (7, 6), which increasingly interlock during the bracing in the bracing direction (V), and the frame parts (6, 7) are oriented and secured relative to one another.

## Revendications

1. Traversée de câble (1) comprenant un cadre (2), qui comprend au moins un espace (10) pour la réception d'au moins un passe-câble élastique (3), et qui présente au moins une première et une deuxième partie de cadre (6, 7), ainsi qu'un levier de serrage (8), qui est mobile en rotation autour d'un pivot (23) relié à la première partie de cadre (6) et est mobile entre une position ouverte et une position fermée, dans laquelle les parties de cadre (6, 7) sont serrées l'une contre l'autre dans une direction de serrage (V) dans la position fermée du levier de serrage (8), dans laquelle le levier de serrage (8) et/ou la deuxième partie de cadre (7) comprend/comprennent une première surface de guidage (22) et la deuxième partie de cadre (7) et/ou le levier de serrage (8) comprend/comprennent un premier bord coulissant (21) qui coulisse au moins temporairement le long de la première surface de guidage (22) lorsque le levier de serrage (8) se déplace, dans laquelle la première surface de guidage (22) s'étend obliquement par rapport à la direction de serrage (V) de telle sorte que les parties de cadre (6, 7) puissent se déplacer l'une vers l'autre lorsque le levier de serrage (8) se déplace dans sa position fermée,
**caractérisée en ce que**
entre le levier de serrage (8) et la deuxième partie de cadre (7), une autre deuxième surface de guidage (26) et un autre deuxième bord coulissant (25) sont formés et viennent en prise après la première surface de guidage (22) et le premier bord coulissant (21) lorsque le levier de serrage (8) se déplace dans sa position fermée, de sorte qu'au début du déplacement, un trajet plus long avec des forces de traction inférieures est réalisé et qu'à la fin du déplacement, un trajet plus court avec des forces de traction supérieures est réalisé, dans laquelle la première surface de guidage (22) présente une distance par rapport au pivot (23) du levier de serrage (8) autour de la première partie de cadre (6) plus grande que la deuxième surface de guidage (26).

2. Traversée de câble (1) selon la revendication 1, **caractérisée en ce que** la pente de la première surface de guidage (22) s'aplatit au fur et à mesure que le levier de serrage (8) s'approche de sa position fermée, de telle sorte que les parties de cadre (6, 7) puissent se déplacer l'une vers l'autre au fur et à mesure que le trajet devienne plus court, en fonction de la section angulaire de la rotation du levier de serrage (8).

3. Traversée de câble (1) selon la revendication 1 ou 2, **caractérisée en ce que** la première surface de guidage (22) comprend un évidement (24) dans la région de contact avec le premier bord coulissant (21) à la fin du déplacement du levier de serrage (8) dans la position fermée.

4. Traversée de câble (1) selon la revendication 3, **caractérisée en ce que** l'évidement (24) est conçu de telle sorte que, par rapport au premier bord coulissant (21), il commence une fois que le second bord coulissant (25) est venu en prise avec la deuxième surface de guidage (26) lorsque le levier de serrage (8) se déplace dans la position fermée.

5. Traversée de câble (1) selon l'une des revendications 1 à 4, **caractérisée en ce que** la première partie de cadre (6) est conçue sous la forme d'un couvercle présentant une liaison mobile en rotation avec l'au moins un levier de serrage (8) et la deuxième partie de cadre (7) est conçue sous la forme d'une partie de cadre en forme d'U avec deux jambes (9).

6. Traversée de câble (1) selon la revendication 5, **caractérisée en ce que** le couvercle reçoit deux parmi les leviers de serrage (8) au niveau de chacune de ses extrémités qui se trouvent à côté des jambes (9) de la deuxième partie de cadre (7) dans la position fermée.

7. Traversée de câble (1) selon l'une des revendications 1 à 56, **caractérisée en ce que** la première partie de cadre (6) reçoit un levier de serrage (8) au niveau de sa première extrémité et comprend, au niveau de son autre extrémité, une saillie (19) pour le montage et le guidage en rotation de la première partie de cadre (6) dans un évidement correspondant (20) de la deuxième partie de cadre (7), dans laquelle le levier de serrage (8) se trouve à côté de l'une des jambes (9) de la deuxième partie de cadre (7) dans la position fermée.

8. Traversée de câble (1) selon l'une des revendications 1 à 7, **caractérisée en ce que** le levier de serrage (8) ou la jambe correspondante (9) de la deuxième partie de cadre (7) comprend au moins une rainure centrale (16) le long de sa plus longue extension, dans laquelle rainure au moins une saillie (15) de la jambe (9) de la deuxième partie de cadre (7) ou le levier de serrage (8) fait saillie dans la position fermée du levier de serrage (8).

9. Traversée de câble (1) selon la revendication 8, **caractérisée en ce qu'**au moins l'une parmi les surfaces de guidage (22, 26) est formée dans l'au moins une saillie (15), et dans laquelle au moins l'un parmi les bords coulissants (21, 22) est formé par une partie rétrécie partielle de l'au moins une rainure (16).

10. Traversée de câble (1) selon l'une des revendications 1 à 9, **caractérisée en ce que** le levier de serrage (8) et la deuxième partie de cadre (7) comprennent des trous (17, 18) perpendiculaires à l'étendue plane du cadre (2), qui s'alignent dans la position fermée du levier de serrage (8).

11. Traversée de câble (1) selon l'une des revendications 1 à 10, **caractérisée en ce que** le levier de serrage (8) est fixé dans sa position fermée par rapport à la deuxième partie de cadre (7) par un crochet de blocage (27).

12. Traversée de câble selon l'une des revendications 1 à 12, **caractérisée en ce que** les parties de cadre (6, 7) comprennent des saillies d'orientation (13) et des parties évidées correspondantes (14) dans l'autre partie de cadre respective (7, 6), qui s'imbriquent progressivement les unes dans les autres pendant le serrage dans la direction de serrage (V), et les parties de cadre (6, 7) sont orientées et solidaires l'une par rapport à l'autre.
